# EUROPEAN PATENT SPECIFICATION

(11) **EP 0 233 069 B1**
(45) Date of publication and mention of the grant of the patent: **15.12.1993**
(21) Application number: 87301063.1
(22) Date of filing: 06.02.1987
(51) Int. Cl.: C09J 179/08

(54) **Polyimide and its use as a high-temperature adhesive.**
Polyimid und seine Verwendung als Hochtemperaturklebstoff.
Polyimide et son utilisation comme adhésif haute température.

(30) Priority: 12.02.1986 JP 26936/86
(43) Date of publication of application: 19.08.1987
(73) Proprietor: MITSUI TOATSU CHEMICALS, Inc., Chiyoda-Ku Tokyo 100 (JP)
(72) Inventor: Oikawa, Hideaki, Yokohama-shi Kanagawa-ken (JP); Ohta, Masahiro, Yokohama-shi Kanagawa-ken (JP); Kawasima, Saburo, Yokosuka-shi Kanagawa-ken (JP); Tamai, Shoji, Yokohama-shi Kanagawa-ken (JP); Sonobe, Yoshiho, Kanagawa-ken (JP); Yamaguchi, Akihiro, Kanagawa-ken (JP)
(74) Representative: Hayward, Denis Edward Peter

(56) References cited:
- DE-A- 3 223 075
- GB-A- 1 317 321
- CHEMICAL ABSTRACTS, vol. 96, no. 4, 25th January 1982, page 5, column 1, abstract no. 20532k, Columbus, Ohio, US; M.M. KOTON et al.: "Polyimides containing different heterocyclic units in the main chain"

## Description

This invention relates to a novel polyimide, a method for preparing the same and their use as high-temperature adhesives. The invention particularly concerns very excellent adhesives having outstanding adhesive strength and high-temperature stability.

Since the polyimides prepared by reacting tetracarboxylic dianhydrides with diamines have been known to possess various excellent physical properties including thermal stability, they are hereafter expected to find wide use in the field where high-temperature stability is required.

Although many polyimides developed up to this time have exhibited superior characteristics, they have suffered from the drawbacks that excellent high-temperature stability has been accompanied by poor processability, or if the resin has been adapted for improved processability the result has been inferior high-temperature stability and solvent resistance.

Therefore, the object of this invention is to provide a novel polyimide having, in addition to its quite outstanding high-temperature stability, excellent workability and, when used as an adhesive, also possessing excellent bond strength and durability at high-temperatures for a long period.

The inventors have researched intensively to achieve the above object. As a result, they have found a novel polyimide satisfying the requirements and particularly successful for use in high-temperature adhesives.

According to the present invention, there is provided a polyimide having recurring units of the formula: 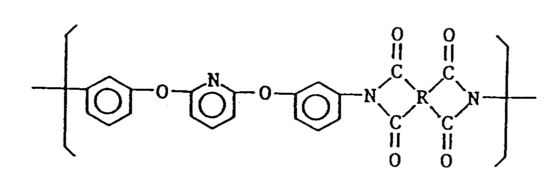
(where R is a tetra-valent radical selected from aliphatic radicals having not less than two carbons, cyclo-aliphatic radicals, monocyclic aromatic radicals, fused polycyclic aromatic radicals, and polycyclic aromatic radicals wherein the aromatic rings are connected to one another either by a direct bond or via a bridging group)
said polyimide being obtainable from a polyamic acid precursor having recurring units of the formula: 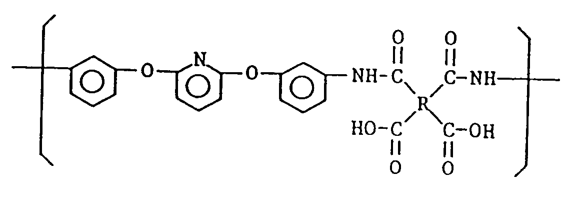
(where R is as above)
and an inherent viscosity of 0.1 to 3.0 dl/g measured at 35°C in a solution of 0.5 gram of said polyamic acid per 100 ml of N,N-dimethylacetamide solvent.

The invention also provides a method for preparing a polyimide having recurring units of the formula: 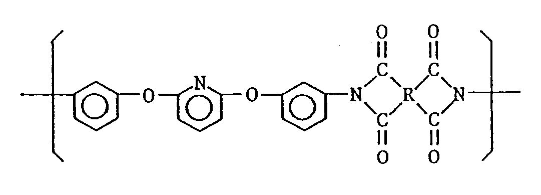
(where R is a tetra-valent radical selected from aliphatic radicals having not less than two carbons, cyclo-aliphatic radicals, monocyclic aromatic radicals, fused polycyclic aromatic radicals, and polycyclic aromatic radicals wherein the aromatic rings are connected to one another either by a direct bond or via a bridging group),
which comprises thermally or chemically imidizing polyamic acid having recurring units of the formula: 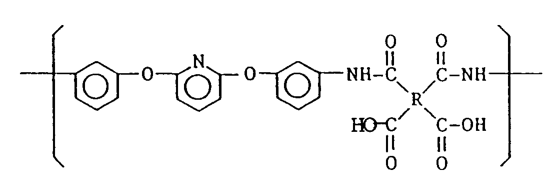
(where R is as above)
and an inherent viscosity of 0.1 to 3.0 dl/g measured at 35°C in a solution of 0.5 gram of said polyamic acid per 100 ml of N,N-dimethylacetamide solvent, and which is obtained by reacting 2,6-bis(3-aminophenoxy)pyridine with a tetracarboxylic dianhydride represented by the formula: 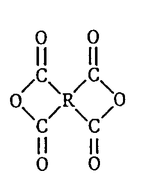
(where R is as above)
in an organic solvent.

The polyimide according to the invention having recurring units of the formula: 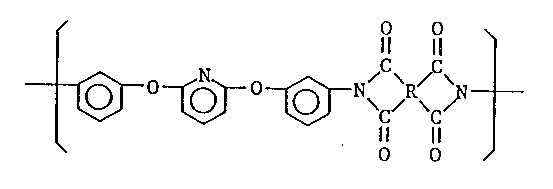
(where R is a tetra-valent radical selected from aliphatic radicals having not less than two carbons, cyclo-aliphatic radicals, monocyclic aromatic radicals, fused polycyclic aromatic radicals, and polycyclic aromatic radicals wherein the aromatic rings are connected to one another either by a direct bond or via a bridging group)
said polyimide being obtainable from a polyamic acid precursor having recurring units of the formula: 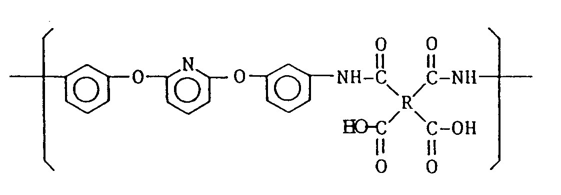
(where R is as above)
and an inherent viscosity of 0.1 to 3.0 dl/g measured at 35°C in a solution of 0.5 gram of said polyamic acid per 100 ml of N,N-dimethylacetamide solvent is used as high-temperature adhesive.

The invention further provides a method of adhesion which comprises applying a polyimide adhesive as aforesaid to a surface of a substrate and overlapping said surface in contiguity with a surface of another substrate, followed by heating under pressure above the glass transition temperature of the polyimide.

The polyimide of the present invention is characterised by the use of 2,6-bis(3-aminophenoxy)pyridine as the diamine component and is obtained by conducting a dehydrating ring-closure of the polyamic acid which is prepared by polymerising this pyridine derivative with a tetracarboxylic dianhydride. Thus a polyimide may be derived from a diamine having both a pyridine ring and aromatic amino radicals in its molecule. This particular polyimide is entirely novel and has not been known up to this time.

The polyimide of this invention has high-temperature stability as good as that of more conventional polyimides and yet surprisingly has excellent processability and high-temperature adhesion due to the thermoplastic properties of the polyimide. Moreover, since the polyimide has pyridine rings in its polymer chain, metal chelates can be formed by doping with metal ions to produce a product that exhibits magnetism or electrical conductivity. In addition, the polyimide can be molded to form hollow fibers and thin films which are capable of capturing and separating some kinds of cations. Furthermore, the polyimide is also useful as a functional polymer which can be employed as a polymer catalyst in polymerisation reactions.

Therefore, the polyimide of this invention is a valuable substance which can be applied in a wide variety of fields, such as in base materials for space and aeronautics, electrical and electronic appliances, high-temperature adhesives, medical polymers and separation membranes.

The polyimide can be prepared by the following methods.

In the first step, polyamic acid is obtained by polymerising 2,6-bis(3-aminophenoxy)pyridine with tetracarboxylic dianhydride in an organic solvent.

Tetracarboxylic dianhydrides for use in the method of this invention have the formula: 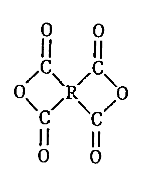
(where R is a tetra-valent radical selected from aliphatic radicals having not less than two carbons, cycloaliphatic radicals, monocyclic aromatic radicals, fused polycyclic aromatic radicals, and polycyclic aromatic radicals wherein the aromatic rings are connected to one another by a direct bond or via a bridging group).

Tetracarboxylic dianhydrides that can be used include, for example, ethylene tetracarboxylic dianhydride, cyclopentane tetracarboxylic dianhydride pyromellitic dianhydride, 3,3',4,4'-benzophenone tetracarboxylic dianhydride, 2,2',3,3'-benzophenone tetracarboxylic dianhydride, 3,3',4,4'-biphenyl tetracarboxylic dianhydride, 2,2',3,3'-biphenyltetracarboxylic dianhydride, 2,2-bis(3,4-dicarboxyphenyl)propane dianhydride, 2,2-bis(2,3-dicarboxyphenyl)propane dianhydride, bis(3,4-dicarboxyphenyl) ether dianhydride, bis(3,4-dicarboxyphenyl) sulfone dianhydride, 1,1-bis-(2,3-dicarboxyphenyl)ethane dianhydride, bis(2,3-dicarboxyphenyl)methane dianhydride, bis(3,4-dicarboxyphenyl)methane dianhydride, 2,3,6,7-naphthalene tetracarboxylic dianhydride, 1,4,5,8-naphthalene tetracarboxylic dianhydride, 1,2,5,6-naphthalene tetracarboxylic dianhydride, 1,2,3,4-benzene tetracarboxylic dianhydride, 3,4,9,10-perylene tetracarboxylic dianhydride, 2,3,6,7-anthracene tetracarboxylic dianhydride and 1,2,7,8-phenanthrene tetracarboxylic dianhydride.

Preferred in particular among these dianhydrides are pyromellitic dianhydride, and 3,3',4,4'-benzophenonetetracarboxylic dianhydride.

The tetracarboxylic dianhydride can be used alone or in mixtures of two or more.

The polyamic acid can normally be prepared by reacting the diamine with the tetracarboxylic dianhydride in organic solvents. The organic solvents used in the reaction include, for example, N,N-dimethylformamide, N,N-dimethylacetamide, N,N-diethylacetamide, N,N-dimethylmethoxyacetamide, N-methyl-2-pyrrolidone, 1,3-dimethyl-2-imidazolidinone, N-methylcaprolactam, 1,2-dimethoxyethane, bis(2-methoxyethyl) ether, 1,2-bis(2-methoxyethoxy)ethane, bis[2-(2-methoxyethoxy)ethyl] ether, tetrahydrofuran, 1,3-dioxane, 1,4-dioxane, pyridine, picoline, dimethyl sulfoxide, dimethyl sulfone, tetramethylurea, and hexamethylphosphoramide. These solvents can be used alone or in mixtures of two or more.

The reaction temperature is normally 60°C or less, preferably 50°C or less. The reaction pressure is not particularly restricted and atmospheric pressure is sufficient for carrying out the reaction. The reaction time depends upon the type of solvents, the reaction temperature, and the starting materials such as the tetracarboxylic dianhydride, and is normally long enough to complete the formation of polyamic acid represented by the undermentioned formula. Reaction for 4-24 hours is usually sufficient.

Such reaction affords polyamic acid having recurring units of the formula: 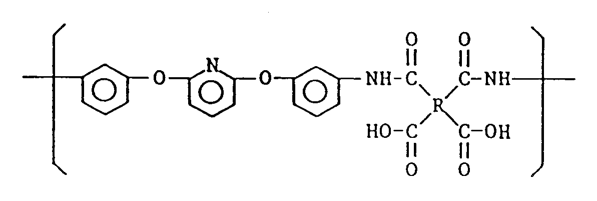
(where R is as above).

In the present invention, the polyamic acid precursor of the polyimide is required to have an inherent viscosity of 0.1 to 3.0 dl/g, preferably 0.3 to 2.5 dl/g.

In the next step, thermal dehydration of the polyamic acid solution at 100 to 400°C, or chemical dehydration by treating with a known imidizing agent such as acetic anhydride, affords the corresponding polyimide having recurring units of the formula: 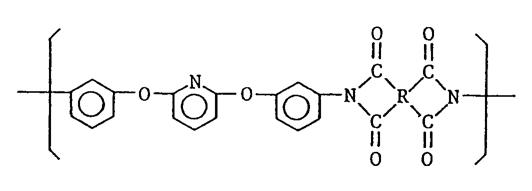
(where R is as above).

The polyimide of this invention can be employed as an adhesive in the following manner.

The polyamic acid is thermally or chemically dehydrated to give, for example, a polyimide film or polyimide powder. The film or powder is inserted between substrates, pressed at 50 to 400°C under a pressure of 1 to 1000 kg/cm² and cured at 100 to 400°C. The substrates become strongly bonded.

There is no difficulty at all if a portion of the polyamic acid is still contained in the polyimide.

In another method, a solution of the polyamic acid dissolved in an organic solvent, or the reaction mixture as it is resulting from formation of the polyamic acid in an organic solvent, can be applied as a thin layer on the substrate to be bonded. Then the substrate is preheated for the requisite number of hours at 180 to 350°C, and more preferably at approximately 220°C, to remove excess solvent and to convert the polyamic acid into polyimide in situ on the surface of the substrate. The coated substrate thus obtained is then overlapped with another substrate, pressed at 50 to 400°C under a pressure of 1 to 1,000 kg/cm² and cured at 100 to 400°C. This method is also a preferred one and firm adhesion of the substrates can be obtained.

### EXAMPLES

The present invention will now be further illustrated by an example of synthesis of the pyridine derivative followed by Examples of the production of polyimides.

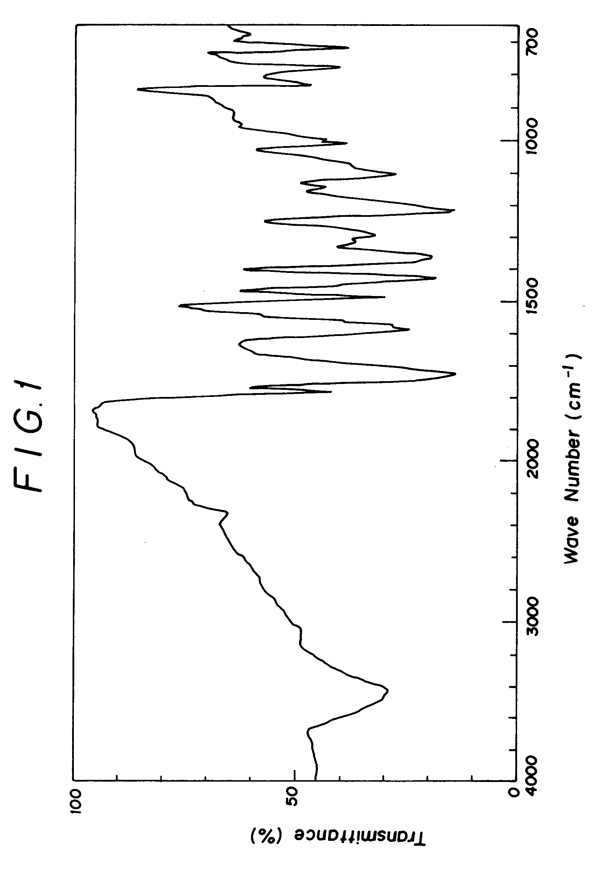

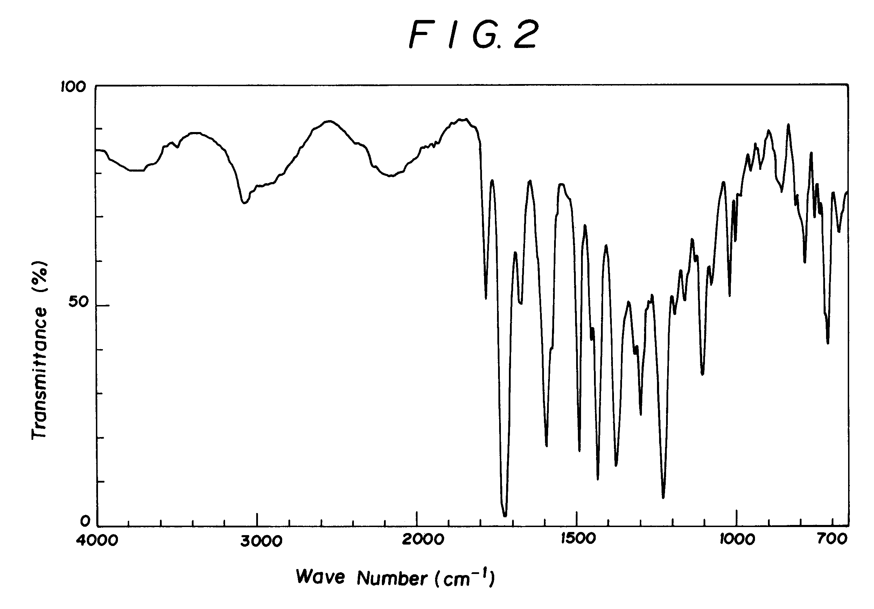

In the drawings, Figures 1 and 2 show IR absorption spectra of polyimides produced in the following Examples.

### Synthesis Example

A 200 ml flask equipped with a stirrer, nitrogen inlet tube and water separator was charged with 22.4 grams (0.205 mol) of 3-aminophenol, 12.8 grams (0.22 mol) of 96% potassium hydroxide flake, 100 ml of dimethylsulfoxide and 10 ml of toluene. The mixture was heated with stirring under a nitrogen atmosphere. Water generated in the reaction mixture was removed by a water separator under toluene reflux.

After reducing the internal temperature below 100°C, 14.8 grams (0.10 mol) of 2,6-dichloropyridine was introduced, the mixture was heated again up to an internal temperature of 150 to 160°C and the reaction conducted for eight hours. After cooling, the resultant mixture was poured into 500 ml of water.

The separated brown mass was filtered, washed with water and dried to afford 28.2 grams (96.2% yield) of 2,6-bis(3-aminophenoxy)pyridine. The crude product was recrystallised twice from isopropyl alcohol to obtain pure white crystals having a melting point of 119-120°C. Results of elemental analysis and mass spectral analysis were as follows.

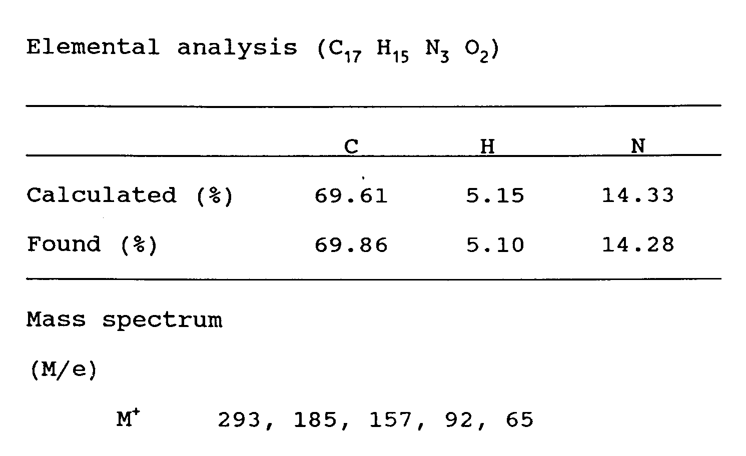

### Example 1

A reaction vessel equipped with a stirrer, reflux condenser and nitrogen inlet tube was charged with 20.53 grams (0.07 mol) of 2,6-bis(3-aminophenoxy)pyridine and 53.09 grams of N,N-dimethylacetamide. Under a nitrogen atmosphere 14.95 grams (0.067 mol) of pyromellitic dianhydride were added portion by portion at room temperature with care taken to prevent temperature rise of the solution and the mixture stirred for 24 hours at room temperature. The polyamic acid thus obtained had an inherent viscosity of 0.72 dl/g, measured at 35°C in a solution of 0.5 gram of the polyamic acid per 100 ml of N,N-dimethylacetamide solvent.

In the next step, a reaction vessel equipped with a stirrer, reflux condenser and nitrogen inlet tube was charged with 33.3 grams of the polyamic acid solution obtained above and 66.7 grams of N,N-dimethylacetamide. Under a nitrogen atmosphere, 5.55 grams (0.055 mol) of triethylamine and 8.0 grams (0.078 mol) of acetic anhydride were added dropwise with stirring at room temperature and the stirring continued for 20 hours. At the end of the reaction, the precipitate was filtered, washed with methanol and dried under reduced pressure at 150°C for eight hours to afford 9.60 grams (96.0% yield) of yellow polyimide powder.

The polyimide powder had a glass transition temperature of 216°C in accordance with the DSC measurement, a melting point of 395°C and a five percent weight decrease temperature in air of 508°C in accordance with DTA-TG.

Figure 1 illustrates the IR absorption spectrum of the polyimide thus obtained. Remarkable absorption is found at 1780cm⁻¹ and 1720cm⁻¹, which are characteristic absorption bands of an imide ring, and 1240cm⁻¹ which is a characteristic absorption band of an ether linkage. The melt viscosity of the polyimide powder obtained in the Example was measured with a flow tester CFT-500 from Shimadzu Seisakusho. Using an orifice 0.1 cm in diameter and 1 cm in length, measurement was performed with a preheat time of five minutes under a load of 100 kg at 400°C. The polyimide powder showed a high flowability and had a melt viscosity of 424 poise and a shear rate of 5775 sec⁻¹. The strand obtained was brown, transparent, very flexible and highly elastic.

In addition, the polyimide powder was applied between cold rolled steel panels (JIS G3141, spcc/SD, 25mm x 100mm x 1.6mm), which were first washed with trichloroethylene and preheated at 130°C, and pressed at 320°C for five minutes under a pressure of 20 kg/cm². The bonded specimen had a lap shear strength of 140 kg/cm² at room temperature and 82 kg/cm² at 240°C in accordance with JIS-K6848 and K6850.

### Example 2

A reaction vessel equipped with a stirrer, reflux condenser and nitrogen inlet tube was charged with 20.5 grams (0.07 mol) of 2,6-bis(3-aminophenoxy)pyridine and 131.67 grams of N,N-dimethylacetamide; and 21.43 grams (0.067 mol) of 3,3',4,4'-benzophenonetetracarboxylic dianhydride was added portion by portion at room temperature under a nitrogen atmosphere with care taken to prevent temperature rise of the solution. The reaction mixture was further stirred for 24 hours at room temperature.

The polyamic acid thus obtained had an inherent viscosity of 0.44 dl/g.

A part of the polyamic acid solution was cast on a glass plate and heated for one hour each at 100°C, 200°C and 300°C to obtain a light-brown transparent film of polyimide having a thickness of 35 microns. The polyimide film had a glass transition temperature of 204°C in accordance with the TMA penetration method and a five percent weight decrease temperature in air of 502°C.

The polyimide film also had a tensile strength of 12.4 kg/mm² and an elongation of 7.5% in accordance with ASTM D-882.

Figure 2 illustrates the IR absorption spectrum of the resultant polyimide film. This shows remarkable absorption at 1780cm⁻¹ and 1720cm⁻¹, which are characteristic absorption bands of an imide ring, and at 1240cm⁻¹ which is a characteristic absorption band of an ether linkage.

The polyimide film was inserted between cold rolled steel panels which were preheated at 130°C and pressed for five minutes at 320°C with a pressure of 20 kg/cm². The bonded specimen had a lap shear strength of 330 kg/cm² at room temperature and 190 kg/cm² at 240°C.

### Example 3

The same reaction vessel as in Example 1 was charged with 20.53 grams (0.07 mol) of 2,6-bis(3-aminophenoxy)pyridine and 53.09 grams of N,N-dimethylacetamide; and 14.95 grams (0.067 mol) of pyromellitic dianhydride was added portion by portion at room temperature under a nitrogen atmosphere with care taken to prevent temperature rise of the solution. The reaction mixture was further stirred for 24 hours at room temperature.

The polyamic acid thus obtained had an inherent viscosity of 0.72 dl/g. A part of the polyamic acid solution was cast on a glass plate and treated under the same conditions as in Example 2 to obtain a light brown opaque film of polyimide having a thickness of 35 microns.

The polyimide film had a glass transition temperature of 230°C, a melting point of 367°C and a five percent weight decrease temperature of 512°C. The film also had a tensile strength of 7.0 kg/mm² and an elongation of 5.0%.

A bonded specimen prepared by using the polyimide film in the same procedure as in Example 2 had a lap shear strength of 120 kg/cm² at room temperature and 70 kg/cm² at 240°C.

### Example 4

The procedure of Example 3 was repeated except bis(2-methoxyethyl) ether was used as the solvent in place of N,N-dimethylacetamide. The polyamic acid thus obtained had an inherent viscosity of 1.10 dl/g. A part of the polyamic acid was treated with the same procedure as in Example 2 to obtain a light brown opaque film of polyimide having a thickness of 35 microns. The polyimide film had a glass transition temperature of 228°C, a melting point of 362°C and a five percent weight decrease temperature in air of 518°C. The film also had a tensile strength of 7.2 kg/cm² and an elongation of 4.8%.

The film was inserted between cold rolled steel panels as described in Example 2 and pressed at 320°C for five minutes under a pressure of 20 kg/cm². The bonded specimen had a lap shear strength of 121 kg/cm² at room temperature and 65 kg/cm² at 240°C.

## Claims

1. A polyimide having recurring units of the formula: 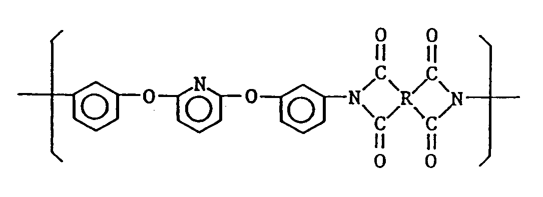 (where R is a tetra-valent radical selected from aliphatic radicals having not less than two carbons, cyclo-aliphatic radicals, monocyclic aromatic radicals, fused polycyclic aromatic radicals, and polycyclic aromatic radicals wherein the aromatic rings are connected to one another either by a direct bond or via a bridging group)
said polyimide being obtainable from a polyamic acid precursor having recurring units of the formula: 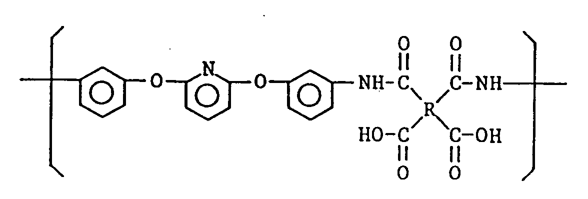 (where R is as above)
and an inherent viscosity of 0.1 to 3.0 dl/g measured at 35°C in a solution of 0.5 gram of said polyamic acid per 100 ml of N,N-dimethylacetamide solvent.

2. A polyimide as claimed in Claim 1, wherein R is a tetra-valent radical represented by the formula:

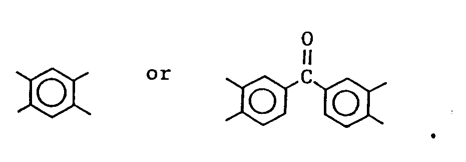

3. A method for preparing a polyimide having recurring units of the formula: 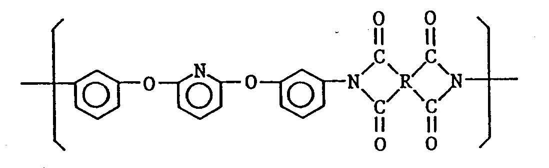 (where R is a tetra-valent radical selected from aliphatic radicals having not less than two carbons, cyclo-aliphatic radicals, monocyclic aromatic radicals, fused polycyclic aromatic radicals, and polycyclic aromatic radicals wherein the aromatic rings are connected to one another either by a direct bond or via a bridging group),
which comprises thermally or chemically imidizing polyamic acid having recurring units of the formula: 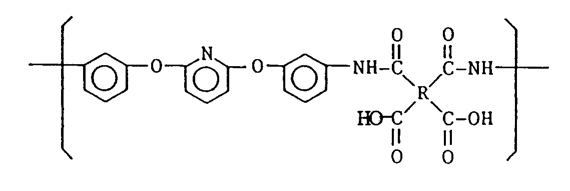 (where R is as above)
and an inherent viscosity of 0.1 to 3.0 dl/g measured at 35°C in a solution of 0.5 gram of said polyamic acid per 100 ml of N,N-dimethylacetamide solvent, and which is obtained by reacting 2,6-bis(3-aminophenoxy)pyridine with a tetracarboxylic dianhydride represented by the formula: 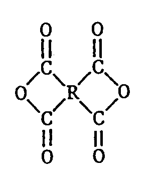 (where R is as above)
in an organic solvent.

4. A method for preparing a polyimide as claimed in Claim 3, wherein R is a tetra-valent radical represented by the formula:

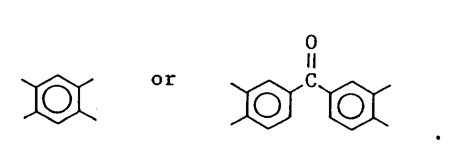

5. The use as a high-temperature adhesive of a polyimide having recurring units of the formula: 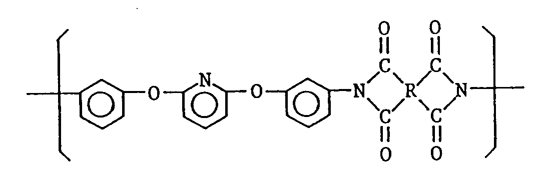 (where R is a tetra-valent radical selected from aliphatic radicals having not less than two carbons, cyclo-aliphatic radicals, monocyclic aromatic radicals, fused polycyclic aromatic radicals, and polycyclic aromatic radicals wherein the aromatic rings are connected to one another either by a direct bond or via a bridging group)
said polyimide being obtainable from a polyamic acid precursor having recurring units of the formula: 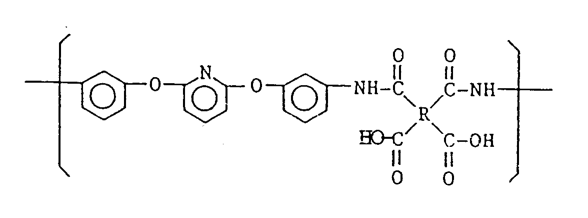 (where R is as above)
and an inherent viscosity of 0.1 to 3.0 dl/g measured at 35°C in a solution of 0.5 gram of said polyamic acid per 100 ml of N,N-dimethylacetamide solvent.

6. The use as claimed in Claim 5, wherein R is a tetra-valent radical represented by the formula:

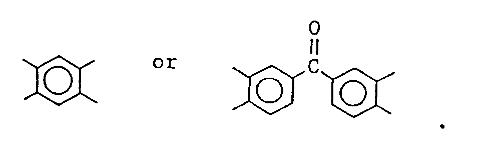

7. A method of adhesion which comprises applying a polyimide adhesive as defined in Claim 5 or Claim 6 to a surface of a substrate and overlapping said surface in contiguity with a surface of another substrate, followed by heating under pressure above the glass transition temperature of the polyimide.

## Patentansprüche

1. Ein Polyimid mit rekurrenten Einheiten der Formel: 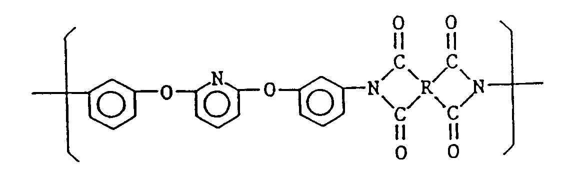 (worin R ein tetravalentes Radikal ist, das aus aliphatischen Radikalen mit mindestens zwei Kohlenstoffen, cycloaliphatischen Radikalen, monocyclischen aromatischen Radikalen, kondensierten polycyclischen aromatischen Kohlenwasserstoffradikalen und polycyclischen aromatischen Radikalen ausgewählt wurde, wobei die aromatischen Kerne entweder durch eine direkte Bindung oder durch Brückenbildung einer Gruppe verbunden sind),
wobei das Polyimid über Polyamidsäure als Zwischenstufe hergestellt wird, die über rekurrente Einheiten folgender Formel verfügt: 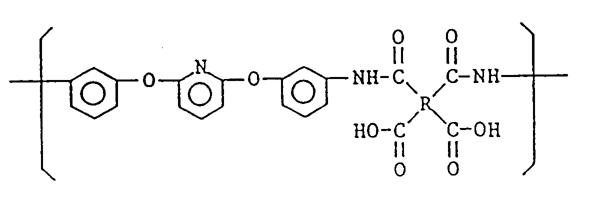 (wobei R wie oben ist)
und eine inhärente Viskosität von 0,1 bis 0,3 dl/g besitzt, gemessen bei 35 °C in einer Lösung aus 0,5 Gramm der Polyamidsäure in 100 ml N,N-Dimethylacetamidlösemittel.

2. Ein Polyimid, wie es in Anspruch 1 geltend gemacht wird, worin R ein tetravalentes Radikal ist, das durch folgende Formel dargestellt wird:

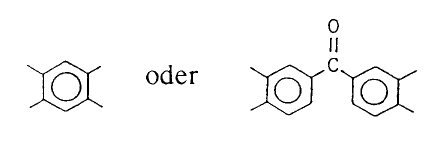

3. Eine Methode zur Gewinnung eines Polyimids mit rekurrenten Einheiten der Formel: 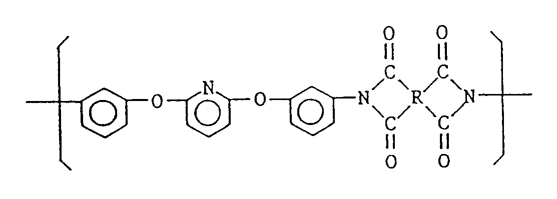 (worin R ein tetravalentes Radikal ist, das aus aliphatischen Radikalen mit mindestens zwei Kohlenstoffen, cycloaliphatischen Radikalen, monocyclischen aromatischen Radikalen, kondensierten polycyclischen aromatischen Kohlenwasserstoffradikalen und polycyclischen aromatischen Radikalen ausgewählt wurde, wobei die aromatischen Kerne entweder durch eine direkte Bindung oder durch Brückenbildung einer Gruppe verbunden sind),
welche die thermische oder chemische Umwandlung von Polyamidsäure, die über rekurrente Einheiten der nachfolgenden Formel verfügt, in Imid beinhaltet: 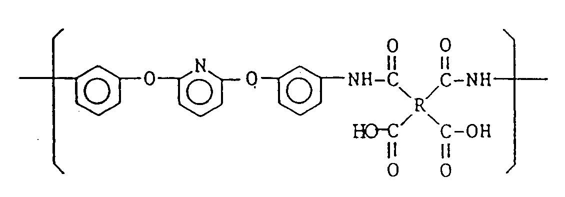 (wobei R wie oben ist)
und das eine inhärente Viskosität von 0,1 bis 3,0 dl/g, gemessen bei 35 °C in einer Lösung aus 0,5 Gramm der Polyamidsäure in 100 ml N,N-Dimethylacetamidlösemittel, besitzt und das gewonnen wird, indem 2,6-bis(3-Aminophenoxy)Pyridin mit Tetracarboxyldianhydrid, dargestellt durch die Formel: 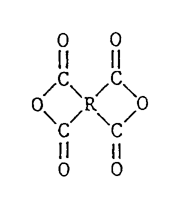 (wobei R wie oben ist)
in einem organischen Lösemittel zur Reaktion gebracht wird.

4. Ein Verfahren zur Gewinnung eines Polyimids, wie es in Anspruch 3 geltend gemacht wird, worin R ein tetravalentes Radikal ist, dargestellt durch die Formel:

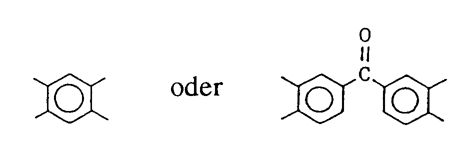

5. Die Verwendung eines Polyimids als Hochtemperaturadhäsionsstoff, das über rekurrente Einheiten folgender Formel verfügt: 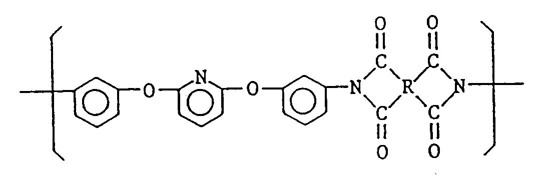 (worin R ein tetravalentes Radikal ist, das aus aliphatischen Radikalen mit mindestens zwei Kohlenstoffen, cycloaliphatischen Radikalen, monocyclischen aromatischen Radikalen, kondensierten polycyclischen aromatischen Kohlenwasserstoffradikalen und polycyclischen aromatischen Radikalen ausgewählt wurde, wobei die aromatischen Kerne entweder durch eine direkte Bindung oder durch Brückenbildung einer Gruppe verbunden sind),
wobei das Polyimid über Polyamidsäure als Zwischenstufe hergestellt wird, die über rekurrente Einheiten folgender Formel verfügt: 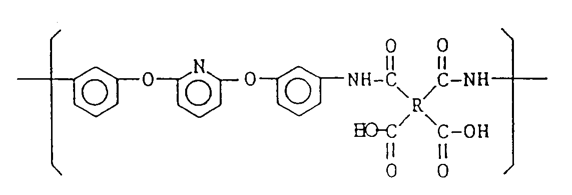 (wobei R ist wie oben)
und eine inhärente Viskosität von 0,1 bis 0,3 dl/g besitzt, gemessen bei 35 °C in einer Lösung aus 0,5 Gramm Polyamidsäure in 100 ml N,N-Dimethylacetamidlösemittel.

6. Die in Anspruch 5 geltend gemachte Verwendung, worin R ein tetravalentes Radikal ist, dargestellt durch die Formel:

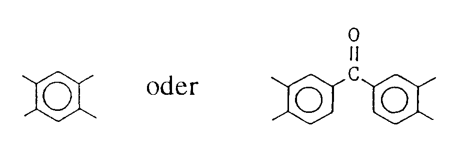

7. Ein Adhäsionsverfahren, bei dem ein Polyimidadhäsionsmittel, wie es in Anspruch 5 oder in Anspruch 6 genau bezeichnet wird, auf die Oberfläche eines Substrats aufgetragen wird und bei dem diese Oberfläche von der Oberfläche eines anderen Substrats so überlappt wird, daß sie sich berühren, worauf unter Druck eine Erhitzung oberhalb der Einfriertemperatur des Polyimids erfolgt.

## Revendications

1. Un polyimide présentant les unités récurrentes de formule : 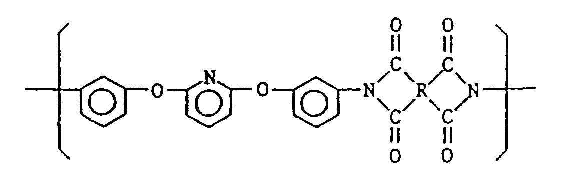 ( où R est un radical trétravalent, sélectionné parmi les radicaux aliphatiques n'ayant pas moins de deux atomes de carbone, les radicaux cyclo-aliphatiques, les radicaux aromatiques monocycliques, les radicaux polycycliques fusionnés, et les radicaux aromatiques polycycliques, dans lequel les anneaux aromatiques sont reliés entre eux soit par une liaison directe soit par un groupe de pontage) ledit polyimide pouvant être obtenu à partir d'un précurseur à base d'acide polyamique présentant des unités récurrentes de formule : 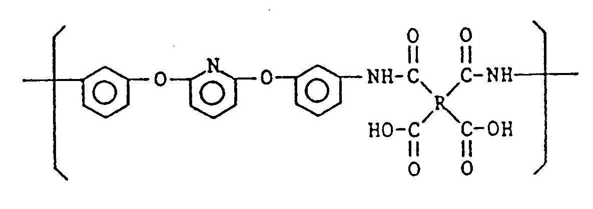 ( où R est tel que ci-dessus)
et présentant une viscosité inhérente de 0,1 à 3,0 dl/g, mesurée à 35°C, dans une solution de 0,5 g dudit acide polyamique, par 100 ml de solvant N,N-diméthylacétamide.

2. Un polyimide selon la revendication 1, dans lequel R est un radical tétravalent, représenté par la formule :

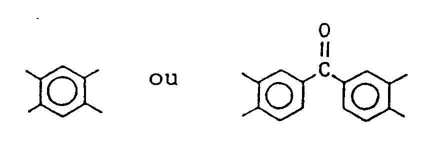

3. Un procédé de préparation d'un polyimide présentant les unités récurrentes de formule : 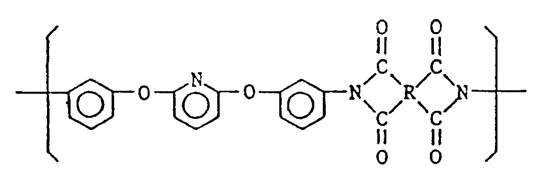 ( où R est un radical trétravalent, sélectionné parmi les radicaux aliphatiques n'ayant pas moins de deux atomes de carbone, les radicaux cyclo-aliphatiques, les radicaux aromatiques monocycliques, les radicaux aromatiques polycycliques fusionnés, et les radicaux aromatiques polycycliques, dans lequel les anneaux aromatiques sont reliés entre eux soit par une liaison directe soit par un groupe de pontage), comprenant l'imidisation par voie thermique ou chimique de l'acide polyamique présentant des unités récurrentes de formule : 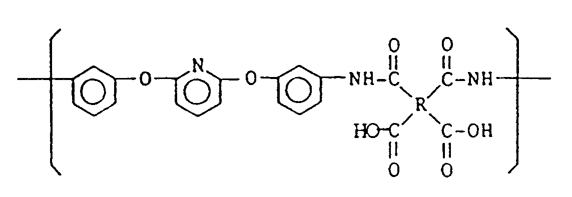 ( où R est tel que ci-dessus)
et présentant une viscosité inhérente de 0,1 à 3,0 dl/g, mesurée à 35°C, dans une solution de 0,5 g dudit acide polyamique, par 100 ml de solvant N,N-diméthylacétamide, et obtenu en faisant réagir de la 2,6-bis(3-aminophenoxy)pyridine avec du dianhydride tétracarboxylique, représenté par la formule : 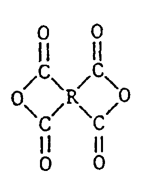 (où R est tel que ci-dessus)
dans un solvant organique.

4. Un procédé de préparation d'un polyimide selon la revendication 3, dans lequel R est un radical tétravalent représenté par la formule :

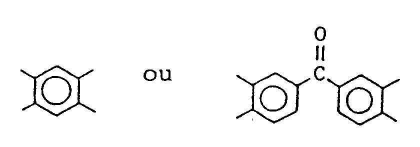

5. L'utilisation comme adhésif à haute température d'un polyimide présentant des unités récurrentes de formule : 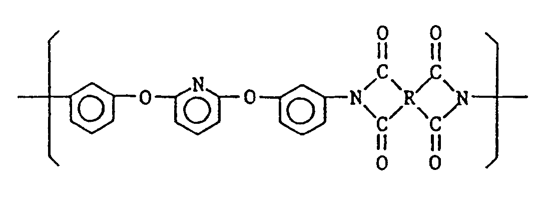 (où R est un radical trétravalent, sélectionné parmi les radicaux aliphatiques n'ayant pas moins de deux atomes de carbone, les radicaux cyclo-aliphatiques, les radicaux aromatiques monocycliques, les radicaux aromatiques polycycliques fusionnés, et les radicaux aromatiques polycycliques, dans lequel les anneaux aromatiques sont reliés entre eux soit par une liaison directe soit par un groupe de pontage) ledit polyimide pouvant être obtenu à partir d'un précurseur à base d'acide polyamique présentant des unités récurrentes de formule : 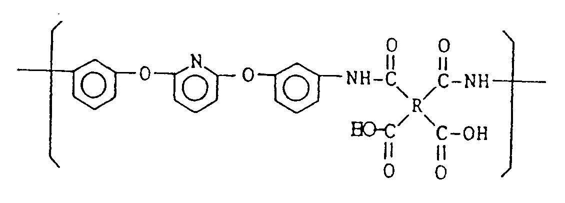 (où R est tel que ci-dessus)
et présentant une viscosité inhérente de 0,1 à 3,0 dl/g, mesurée à 35°C, dans une solution de 0,5 g dudit acide polyamique, par 100 ml de solvant N,N-diméthylacétamide.

6. L'utilisation selon la revendication 5, dans laquelle R est un radical tétravalent représenté par la formule :

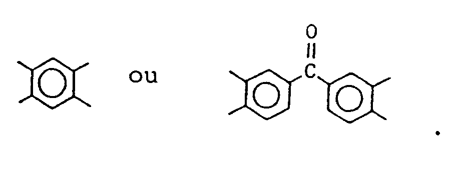

7. Un procédé d'adhésion comprenant l'application d'un adhésif à base de polyimide tel que défini selon la revendication 5 ou la revendication 6, à une surface d'un substrat et chevauchement de ladite surface en contiguïté avec une surface d'un autre substrat, suivi par un chauffage sous pression, à une température supérieure à la température de transition vitreuse du polyimide.
